# EUROPEAN PATENT SPECIFICATION

(11) **EP 3 257 099 B1**
(45) Date of publication and mention of the grant of the patent: **27.11.2019**
(21) Application number: 16749669.4
(22) Date of filing: 08.02.2016
(51) Int. Cl.: H01M 4/38, H01M 10/052, H01M 10/0568, H01M 10/0569, H01M 4/505, H01M 4/525, H01M 4/58, H01M 4/66

(54) **HIGH SALT CONCENTRATION ELECTROLYTES FOR RECHARGEABLE LITHIUM BATTERY**
ELEKTROLYTEN MIT HOHER SALZKONZENTRATION FÜR WIEDERAUFLADBARE LITHIUMBATTERIEN
ÉLECTROLYTES À CONCENTRATION DE SEL ÉLEVÉE POUR BATTERIE AU LITHIUM RECHARGEABLE

(30) Priority: 09.02.2015 US 201562113637 P
(43) Date of publication of application: 20.12.2017
(73) Proprietor: SES Holdings Pte. Ltd, Singapore 048542 (SG)
(72) Inventor: TIRUVANNAMALAI, Arunkumar, Waltham, MA 02451 (US); HWANG, Jaehee, Burlington, MA 01803 (US); LI, Xiaobo, Framingham, MA 01702 (US); MATULEVICH, Yury, Waltham, MA 02451 (US); HU, Qichao, Somerville, MA 02143 (US)
(74) Representative: HGF Limited
(86) International application number: PCT/US2016/017020
(87) International publication number: WO 2016/130484

(56) References cited:
- WO-A1-2014/065067
- WO-A1-2014/126256
- CN-A- 103 531 839
- JP-A- 2005 243 321
- US-A1- 2012 244 425
- US-A1- 2012 258 357
- US-A1- 2014 011 099
- US-A1- 2014 342 241
- US-A1- 2014 363 746

## Description

### TECHNICAL FIELD

The disclosure relates generally to rechargeable batteries, and more specifically, to rechargeable lithium batteries with high energy density, and the use of high salt concentration electrolytes to attain improved cycle life.

### BACKGROUND

Lithium-ion batteries are now the battery of choice for portable electronics such as cellular phones and laptop computers as they offer significantly higher energy and power compared to other rechargeable chemistries. They are also being pursued intensively for electric vehicle and grid storage applications.

Commercial lithium-ion batteries typically have a metal oxide based cathode, a graphite based anode, and a non-aqueous electrolyte. Such batteries typically exhibit a specific energy of about 250 Wh/kg and an energy density of about 600 Wh/L. However, the current lithium-ion technology cannot satisfy the increasing energy density demands of the future.

Lithium metal is the ideal anode material for rechargeable batteries as it offers the highest theoretical specific capacity of 3860 Ah/kg (vs. 370 Ah/Kg for graphite) and the lowest negative electrochemical potential (-3.04 V vs. SHE), of all metals. Substituting the graphite anode in lithium-ion batteries with metallic lithium can potentially enhance the overall energy density of the battery above 1000 Wh/L.

Although metallic lithium is used in primary cells, application to rechargeable batteries has been unsuccessful as the lithium structure degrades upon repeated charge/discharge cycling, limiting cycle life and potentially leading to an internal short circuit and other serious safety issues.

When compared with dense lithium metal, electro-deposited lithium at the anode during battery charging exhibits a "dendritic" or "mossy" morphology with high porosity and surface area. This could be a result of an uneven current distribution at the metal-electrolyte interface during charge, caused by the presence of a "solid electrolyte interface (SEI) or passivation" layer formed between the lithium metal and electrolyte components on contact. Since lithium is thermodynamically unstable in organic solvents, formation of a SEI layer is essential to inhibit the continuous chemical reaction between lithium and organic solvents.

The high surface area of the electro-deposited lithium at anode will further expose fresh lithium to the electrolyte, which will then irreversibly generate more SEI components. The SEI formation at the lithium grain surface prevents the lithium grains from fusing together and forming the required metallic lithium-lithium contacts at the grain boundaries, which may lead to lithium loss by the formation of electrically isolated or "dead" lithium.

Moreover, repeated SEI formation on cycling consumes both lithium metal and electrolyte, and leads to lithium loss and drying up of the electrolyte. Lithium loss decreases the coulombic efficiency and cycle life, and electrolyte loss, increase the cell resistance of the battery.

In extreme conditions, lithium dendrites formed on the anode surface might penetrate the separator and make electrical contact with the cathode, causing a short circuit in the cell. Cell shorting by dendrites may lead to dramatic battery failure, accompanied by fire and explosion.

Moreover, high current densities during fast charging greatly accelerate the formation of lithium dendrites and intensify the surface reaction between the anode and the electrolyte, leading to the fast depletion of both lithium and electrolyte, that consequently degrades the cycle life and stability of the battery.

Several approaches have been pursued earlier to suppress lithium dendrite formation and growth, for example, improving the stability of SEI, developing an electrolyte with strong shear modulus, using a large surface area lithium anode to reduce the effective current density, modifying the battery charging pattern, self-healing electrostatic shield mechanism, etc.

Most approaches to dendrite mitigation focus on improving the stability and uniformity of the SEI layer on the lithium surface by optimizing the electrolyte components such as lithium salts, solvents, and additives. However, since the SEI layer is essentially made of reaction products between lithium and electrolyte (the majority of which is a mixture of various lithium salts), it is very difficult to achieve a thin, uniform and stable passivation layer, with existing electrolytes.

Alternatively, electrolytes with high shear modulus such as a lithium ion (Li⁺) conducting polymer, glass, or ceramic material have been proposed, to act as mechanical barriers to block dendrite penetration. However, solid-state electrolytes have limited kinetic properties, due to low conductivity at room temperature and high interfacial resistance, and are typically not suitable for practical applications.

Decreasing the current density during the charging process (lithium deposition) or modifying the charging style (e.g., pulse charging), are effective methods for slowing down lithium dendrite growth. However, the increasing need to quickly re-charge batteries can make it impractical to improve the cycle life of the battery, by simply lowering the charging current density.

Another approach to decrease the current density is to increase the effective electrode surface, for example, to adopt lithium metal powder with high surface area as the anode. However, this approach can significantly decrease the energy density of the lithium metal battery.

Lithium films electro-deposited at high pressure were found to be more dense and uniform. Pressure applied during the charging process decreases the isolation of the deposited lithium and increases the lithium coulombic efficiency. However, applying external pressure to the battery might increase the likelihood of cell shorting.

Several novel approaches, such as the self-healing electrostatic shield mechanism, have been proposed recently, but such mechanisms seem to work only for low current ranges, making them unfit for practical batteries

CN 103 531 839 A discloses a lithium metal battery with a liquid electrolyte comprising a 5 M solution of lithium bis(fluorosulfonyl)imide (LiFSI) in a solvent mixture composed of ethylene carbonate (EC) and dimethyl carbonate (DMC) in a 3:7 volume proportion.

WO 2014/065067 A1 describes electrolytic solutions for lithium metal batteries, comprising LiFSI dissolved in acetonitrile at a concentration of 4.2 M.

US 2014/363746 A1 and JP 2005 243321 A refer to lithium metal batteries comprising a liquid electrolyte with a high concentration of a lithium imide salt, such as lithium bis(trifluoromethanesulfonyl)imide (LiTFSI).

The use of lithium imide salts having a fluorosulfonyl group, such as LiFSI, as electrolyte salt for non-aqueous electrolytic solutions is also disclosed in WO 2014/126256 A1, US 2014/342241 A1, US 2012/258357 A1 and US 2012/244425 A1, but not in high concentrations.

### SUMMARY

In certain aspects, the present disclosure relates to rechargeable lithium batteries offering high energy, power, and coulombic efficiency and long cycle life. In certain aspects, the rechargeable batteries include a cathode, a lithium metal anode, and a liquid electrolyte, wherein the electrolyte is an organic solvent with high lithium salt concentration. In certain aspects, the rechargeable lithium batteries exhibit high lithium coulombic efficiency (e.g., above 95%, above 97%, above 99%).

In one or more embodiments, the liquid electrolyte contains a lithium salt with high solubility with concentration exceeding 2 moles per liter of the organic solvent of interest.

In one or more embodiments, the high lithium salt concentration electrolyte has conductivity exceeding 1 mS/cm.

In one or more embodiments, the organic solvent used in the high salt concentration electrolyte has viscosity below 5 cP at 50°C, to support the high solubility of the lithium salt of interest.

In one or more embodiments, the solvent used in the high salt concentration electrolyte has electrochemical stability to support the use of cathodes that reversibly intercalates lithium at potentials above 1V vs. lithium metal anode.

In one aspect, a rechargeable lithium battery includes a cathode, a lithium metal anode, and a liquid electrolyte including a lithium imide salt with a fluorosulfonyl (FSO₂) group, wherein the electrolyte is an organic solvent with a lithium imide salt concentration of at least 2 moles per liter of the organic solvent, and wherein the cathode active material is a layered or a spinel oxide material selected from the group consisting of LiCoO_{2,} Li(Ni_{1/3}Mn_{1/3}Co_{1/3})O₂, Li(Ni_{0.8}Co_{0.15}Al_{0.05})O₂, LiMn₂O₄, Li(Mn_{1.5}Ni_{0.5})₂O₄, or their lithium-rich versions.

In one or more embodiments, the lithium imide salt is or comprises or consists essentially of, LiN(FSO₂)₂. In one or more embodiments, the lithium imide salt is or comprises or consists essentially of, LiN(FSO₂)₂, LiN(FSO₂)(CF₃SO₂), LiN(FSO₂)(C₂F₅SO₂), and any combination thereof.

In one or more embodiments, the electrolyte contains a mixture of lithium salts where at least one of them is a lithium imide salt with a fluorosulfonyl (FSO₂) group.

In one or more embodiments, the electrolyte has lithium salt concentration between 2 to 10 moles per liter of the organic solvent.

In one or more embodiments, the electrolyte contains a cyclic carbonate as the organic solvent. In one or more embodiments, the cyclic carbonate is selected from ethylene carbonate, propylene carbonate, their derivatives, and any combinations and mixtures thereof as the organic solvent.

In one or more embodiments, the electrolyte contains a cyclic ether as the organic solvent. In one or more embodiments, the cyclic ether is selected from tetrahydrofuran, tetrahydropyran, their derivatives, and any combinations and mixtures thereof as the organic solvent.

In one or more embodiments, the electrolyte contains a glyme as the organic solvent. In one or more embodiments, the glyme is selected from dimethoxyethane, diethoxyethane, triglyme, tetraglyme, their derivatives, and any combinations and mixtures thereof as the organic solvent.

In one or more embodiments, the electrolyte contains an ether as the organic solvent. In one or more embodiments, the ether is selected from diethylether, methybutylether, their derivatives, and any combinations and mixtures thereof as the organic solvent.

In one or more embodiments, the organic solvent consists essentially of dimethoxyethane. In one or more embodiments, the organic solvent consists essentially of dimethoxyethane and the electrolyte has lithium salt concentration between 4 to 6 moles per liter of the organic solvent. In one or more embodiments, the organic solvent consists essentially of dimethoxyethane and the electrolyte has lithium salt concentration between 3 to 7 moles per liter of the organic solvent.

In one or more embodiments, the organic solvent consists essentially of ethylene carbonate. In one or more embodiments, the organic solvent consists essentially of ethylene carbonate and the electrolyte has lithium salt concentration between 2 to 3 moles per liter of the organic solvent. In one or more embodiments, the organic solvent consists essentially of ethylene carbonate and the electrolyte has lithium salt concentration between 2 to 4 moles per liter of the organic solvent.

In one or more embodiments, the anode is a lithium metal foil pressed on a current collector. In one or more embodiments, the current collector includes a copper foil or mesh.

In one or more embodiments, the anode is a bare current collector, including a copper foil or mesh, and lithium is subsequently plated on the bare current collector during the first charge of the battery.

In one or more embodiments, the anode has lithium foil thickness ranging from about 0.1 to about 100 microns. In one or more embodiments, the anode has lithium foil thickness ranging from between 5 to 50 microns. In one or more embodiments, the anode has lithium foil thickness ranging from 10 to 30 microns.

In one or more embodiments, the cathode is a metal oxide material that reversibly intercalates lithium ions at high electrochemical potentials.

In one or more embodiments, the cathode reversibly undergoes intercalation or conversion reaction with lithium ions at potentials above 1V vs. lithium metal anode.

According to the present invention, the cathode is a layered or a spinel oxide material selected from the group consisting of LiCoO₂, Li(Ni_{1/3}Mn_{1/3}Co_{1/3})O₂, Li(Ni_{0.8}Co_{0.15}Al_{0.05})O₂, LiMn₂O₄, Li(Mn_{1.5}Ni_{0.5})₂O₄, or their lithium rich versions.

In one or more embodiments, the cathode is a porous coating comprising an active material powder, a polymeric binder (e.g., PVDF), and a conductive diluent (e.g., carbon black).

In one or more embodiments, the cathode is a porous coating on aluminum foil.

In one or more embodiments, the cathode is a porous coating soaked with liquid electrolyte.

In one or more embodiments, the cathode and anode are held apart by a porous separator soaked with liquid electrolyte that prevents electrical contact while allowing ion conduction.

In one or more embodiments, the battery has a form factor selected from the group consisting of coin, pouch, prism, cylindrical, or thin film.

Another aspect disclosed herein relates to an electrochemical cell including copper foil as a working electrode; a lithium metal foil as a counter electrode; and a liquid electrolyte including a lithium imide salt, wherein the electrolyte is an organic solvent with lithium salt concentration of at least 2 moles per liter of the organic solvent. The lithium imide salt, the lithium imide salt concentration, and the organic solvent may be selected to increase lithium coulombic efficiency to above 95%, measured by electro-plating 3 mAh/cm² of lithium on the copper foil and electro-stripping the lithium from copper foil until the potential reaches +0.5 V and repeating the process at 0.7 rate for at least 20 cycles and determining the average stripping to plating capacity ratio.

In one or more embodiments, the lithium imide salt and the organic solvent are selected to increase lithium coulombic efficiency to above 97%.

In one or more embodiments, the lithium imide salt and the organic solvent are selected to increase lithium coulombic efficiency to above 99%.

Elements of embodiments described with respect to a given aspect of the invention may be used in various embodiments of another aspect of the invention. For example, it is contemplated that features of dependent claims depending from one independent claim can be used in apparatus and/or methods of any of the other independent claims.

### BRIEF DESCRIPTION OF THE DRAWINGS

Figure 1 shows the electrochemical cycling performance of coin cells made with LiCoO₂ cathode, lithium metal anode, and 1.2M LiPF₆ in EC:EMC (3:7) electrolyte, at room temperature and a charge/discharge rate of 0.7C/0.5C, between 3 and 4.25V, according to some aspects of the present disclosure.
Figure 2 shows the electrochemical cycling performance of coin cells made with LiCoO₂ cathode, lithium metal anode, and 1.2M LiPF₆ in EC electrolyte, at room temperature and a charge/discharge rate of 0.7C/0.5C, between 3 and 4.25V, according to some aspects of the present disclosure.
Figure 3 shows the electrochemical cycling performance of coin cells made with LiCoO₂ cathode, lithium metal anode, and 2.5M LiFSI in EC electrolyte, at room temperature and a charge/discharge rate of 0.7C/0.5C, between 3 and 4.25V, according to some aspects of the present disclosure.
Figure 4 shows the electrochemical cycling performance of coin cells made with LiCoO₂ cathode, lithium metal anode, and 5M LiFSI in DME electrolyte, at room temperature and a charge/discharge rate of 0.7C/0.5C, between 3 and 4.25V, according to some aspects of the present disclosure.
Figure 5 shows the electrochemical cycling performance of coin cells made with LiCoO₂ cathode, lithium metal anode, and 5M LiFSI in DME electrolyte, at room temperature and a charge/discharge rate of 0.7C/0.5C, between 3 and 4.4V, according to some aspects of the present disclosure.
Figure 6 shows the electrochemical cycling performance of coin cells made with LiCoO₂ cathode, lithium metal anode, and 2.5M LiFSI in EC electrolyte, at room temperature and a charge/discharge rate of 0.1C/0.5C, between 3 and 4.25V, according to some aspects of the present disclosure.
Figure 7 shows the electrochemical cycling performance of a 2 Ah pouch cell made with LiCoO₂ cathode, lithium metal anode, and 2.5M LiFSI in EC electrolyte, at room temperature and a charge/discharge rate of 0.1C/0.5C, between 3 and 4.4V, according to some aspects of the present disclosure.
Figure 8 shows the electrochemical cycling performance of coin cells made with LiCoO₂ cathode, lithium metal anode, and 5M LiFSI in DME electrolyte, at room temperature and a charge/discharge rate of 0.1C/0.5C, between 3 and 4.25V, according to some aspects of the present disclosure.
Figure 9 shows the electrochemical cycling performance of a 2 Ah pouch cell made with LiCoO₂ cathode, lithium metal anode, and 5M LiFSI in DME electrolyte, at room temperature and a charge/discharge rate of 0.1C/0.5C, between 3 and 4.25V, according to some aspects of the present disclosure.
Figure 10 shows the lithium coulombic efficiency of various high salt concentration electrolytes measured by plating/stripping 3 mAh/cm² of lithium at 0.7C rate, according to some aspects of the present disclosure.
Figure 11 shows the lithium coulombic efficiency of various high salt concentration electrolytes measured by plating/stripping 3 mAh/cm² of lithium at 0.7C rate, according to some aspects of the present disclosure.
Figure 12 (a) - (c) shows the SEM morphology of electro-deposited lithium in electrolytes investigated in this study. (a) Commercial lithium-ion electrolyte (b) 3M LiFSI in EC (c) 5M LiFSI in DME, according to some aspects of the present disclosure.

### DETAILED DESCRIPTION

In some embodiments, the present disclosure relates to batteries, including rechargeable lithium batteries, that exhibit improved electrochemical performance. In some embodiments, a rechargeable battery includes a cathode, a lithium metal anode, and a liquid electrolyte including a lithium salt, wherein the electrolyte is an organic solvent with high lithium salt concentration. In some embodiments, the lithium salt is or comprises a lithium imide salt with a fluorosulfonyl (FSO₂) group. In some embodiments, high lithium salt concentration is a concentration of at least 2 moles per liter of the organic solvent. In some embodiments, high lithium salt concentration is a concentration of between 2 and 10 moles per liter of the organic solvent (including any subsets of this range).

Some embodiments discussed herein demonstrate a novel approach to the design of rechargeable batteries that include components that are selected to achieve optimal electrochemical performance of such batteries. The electrolyte, which includes a salt and an organic solvent, may be selected to increase lithium coulombic efficiency to above 95%, above 97%, or above 99% (e.g., when measured according to the methods described herein). The electrolyte may include a lithium imide salt and an organic solvent, where, the lithium imide salt, the lithium imide salt concentration in the organic solvent, and the organic solvent are selected to increase lithium coulombic efficiency to above 95%, above 97%, or above 99% (e.g., when measured according to the methods described herein).

In some embodiments, the electrolyte includes an organic solvent and a salt. In some embodiments, the organic solvent is or includes a cyclic carbonate (e.g., ethylene carbonate or propylene carbonate, their derivatives, and any combinations or mixtures thereof). In some embodiments, the organic solvent is or includes a cyclic ether such as tetrahydrofuran or tetrahydropyran, their derivatives, and any combinations and mixtures thereof. In some embodiments, the organic solvent is or includes a glyme such as dimethoxyethane or diethoxyethane, their derivatives, and any combinations and mixtures thereof. In some embodiments, the organic solvent is or includes an ether such as diethylether or methylbutylether, their derivatives, and any combinations and mixtures thereof as the organic solvent.

In some embodiments, the salt is or include an imide salt. In some embodiments, the salt is or includes a lithium imide salt with a fluorosulfonyl (FSO₂) group. In some embodiments, the lithium imide salt is or comprises, or consists essentially of, LiN(FSO₂)₂. In some embodiments, the lithium imide salt is or comprises, or consists essentially of, LiN(FSO₂)₂, LiN(FSO₂)(CF₃SO₂), LiN(FSO₂)(C₂F₅SO₂), and any combinations or mixtures thereof.

Electrolyte plays a vital role in batteries to allow conduction of ions between cathode and anode. Conventional liquid electrolytes used in lithium-ion batteries typically have a lithium salt concentration of less than 1.5 moles/liter, which is a trade-off between ionic conductivity, viscosity, and salt solubility.

The concentration of lithium salt in the electrolyte also affects the coulombic efficiency and cycle life of the lithium anode. It is widely known that dendrites start to grow in non-aqueous liquid electrolytes, when Li⁺ ions get depleted (becomes diffusion controlled) in the vicinity of the anode, where deposition occurs during charge.

Coulombic efficiency of a battery, in general, refers to the ratio of the output of charge by a battery (e.g., amount of charge that exits the battery during the discharge cycle) to the input of charge (e.g., the amount of charge that enters the battery during the charging cycle). Coulombic efficiency represents the efficiency with which charge is transferred in a battery. Efficiency is reduced in batteries because of losses in charge, which may occur, for example, because of secondary reactions within the battery. Lithium coulombic efficiency, as discussed herein, refers to the efficiency with which lithium is electro-plated/stripped on the anode of a battery during charge/discharge. Lithium coulombic efficiency is reduced because of lithium loss due to detrimental reactions with electrolyte.

When an external potential is applied during charge, the current flow through the battery leads to an ion concentration gradient in the electrolyte. At very low current densities, a small and stable Li⁺ ion concentration gradient form, and not many lithium dendrites nucleate under this condition. Any dendrite formed at this condition could be a result of local inhomogeneity in SEI and current density distribution. However, at current density values of practical significance in a battery, depletion of Li⁺ ion concentration near the anode results in a substantial formation of lithium dendrites.

In this disclosure, a new class of high salt concentration electrolytes are described that enhance the cycling performance of high-energy rechargeable lithium metal batteries through an improvement in coulombic efficiency and suppression of dendritic growth in metallic lithium anode. A higher lithium salt concentration in the electrolyte elevates the current density at which lithium dendrites begin to grow. A higher salt concentration provides more Li⁺ ion supply at the vicinity of the anode during the charging process, thereby limiting the depletion and concentration gradient of Li⁺ ions in the electrolyte.

Furthermore, a higher lithium salt concentration in the electrolyte increases the flux of Li⁺ ions between the electrodes and raises the Li⁺ ion mass transfer rate between the electrolyte and the metallic lithium electrode, thereby enhancing the uniformity of lithium deposition/dissolution during the charge/discharge process, which consequently improves the coulombic efficiency of the anode and the battery.

Electrolytes with high salt concentration have improved lithium ion mobility and transference number (the ratio of charge transferred by Li⁺ ions in the electrolyte). The conductivity of the Li⁺ ion is proportional to its concentration and mobility in the electrolyte. The mobility of the Li⁺ ion is determined by its size and viscosity of the medium. In low concentration electrolytes, lithium ions coordinate with solvent molecules and form a large solvation shell, and these solvated Li⁺ ions show a relatively lower mobility, than the anions. In high salt concentration systems, the size of this solvation shell can be reduced by the scarcity of the solvents, and the Li⁺ ions can exhibit higher mobility and transference number than the traditionally larger anions.

The higher flux of Li⁺ ions in high salt concentration electrolytes, in theory, could also improve the rate performance of conventional lithium-ion batteries employing graphite anode. However, graphite has a lower rate capability than conventional cathode materials, and the relatively higher viscosity of high salt concentration electrolytes (e.g., greater than about 2 moles per liter of organic solvent) would adversely affect the electrolyte wetting of the porous graphite anode and reduce the overall rate capability of the lithium-ion battery. Moreover, as no metallic lithium deposition occurs in a lithium-ion battery, cycle life could not benefit from employing high salt concentration electrolyte (e.g., above 2 moles per liter of organic solvent). As such, higher salt concentrations (e.g., above 2 moles per liter of organic solvent) are generally undesired in graphite anode batteries.

As the lithium salt concentration increases in an electrolyte solution, ion pairing begins to form, leading to increased viscosity, decreased ion conductivity, and reduced wetting of electrodes and separators. Thus, the electrolyte system, and in particular the electrolyte solvent, is selected to retain the homogeneity of the solution at high salt concentrations, leading to improvements in lithium deposition and cycling properties.

Merely increasing the salt concentration in an electrolyte would not improve the cycle life of lithium metal battery, unless accompanied by an appropriate solvent. As solvents are more prone to reaction with lithium, the selected solvent should form a solvation complex with the high Li⁺ ion concentration in the electrolyte, and make itself unavailable for detrimental reactions with lithium anode, thus improving the coulombic efficiency and cycle life of lithium metal battery.

Although other researchers have previously attempted the use of DME as an electrolyte for the graphite anode of a Li-ion battery, the results of such research are not applicable to the present disclosure and lithium metal anode batteries in general. Indeed, experimental evidence shows that whether or not a particular electrolyte can successfully be used for a graphite anode is not an indicator whether the same electrolyte would successfully work for a lithium metal anode. Different concerns and considerations generally apply to graphite anodes as opposed to lithium metal anodes. For example, in a graphite anode battery, loss of lithium is not a concern, yet, it may be difficult to achieve a high charge/discharge rate. Consequently, efficiency is not a concern in a graphite anode battery, and such batteries typically have high efficiency and cycle life. In contrast, long cycle life in lithium metal anode batteries is difficult to achieve, due in part to poor lithium coulombic efficiency. As discussed below, efficiency of commercially available batteries is typically below 75% (e.g., lithium coulombic efficiency of the commercially available 1.2M LiPF₆ in EC:EMC (3:7) electrolyte is below 75%). The particular electrolyte used has a direct effect on the efficiency of a lithium metal anode battery (among other factors).

The electrolyte composition widely used now in most commercial lithium-ion batteries is 1.2 M LiPF₆ in EC:EMC(3:7).

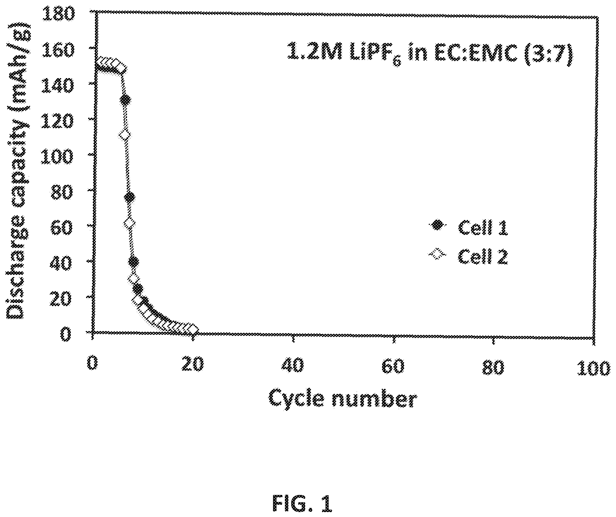

Figure 1 shows the electrochemical cycling performance of coin cells made with LiCoO₂ cathode, lithium metal anode, and the commercially available 1.2M LiPF₆ in EC:EMC (3:7) electrolyte. The cathode is a porous coating of lithium cobalt oxide (LiCoO₂) particles mixed with a small amount of binder and conductive diluent, on aluminum current collector foil, at an active material loading of 18 mg/cm² and an areal capacity of 3 mAh/cm². LiCoO₂ is an intercalation compound with a specific capacity of 150 mAh/g, when cycled between 3 to 4.25 V. The anode is a 20 µm thick high-purity lithium metal foil pressed on copper current collector foil. The cells were cycled between 3 and 4.25 Volts, and the first three formation cycles were done at a low 0.1C rate (i.e., 10 hr charge, 10 hr discharge), for the system to attain equilibrium.

The cells made with commercial electrolyte delivered the expected capacity during the initial formation cycles. However, when cycled at the 0.7C charge and 0.5 discharge rate (i.e., 1.43 hr charge, 2 hr discharge) typically used in lithium-ion batteries for consumer electronics, the cells lost most of the capacity within a few cycles.

EC (ethylene carbonate) is traditionally used as a solvent in electrolytes as it has a wide electrochemical window required for lithium-ion batteries and a high dielectric constant that helps with salt dissolution. However, EC also has a high boiling point and a concomitant high viscosity. To overcome the high viscosity of EC, commercial electrolytes usually employ other low boiling linear carbonates like EMC (ethyl methyl carbonate) in high proportions.

Although EC has been reported in the literature to exhibit lithium coulombic efficiency of about 95%, the efficiency of EMC (ethyl methyl carbonate) is worse. Therefore, the commercial electrolyte with high EMC content would naturally exhibit a high reactivity to the fresh dendritic lithium deposited at the anode at 0.7C charge, which results in high lithium loss, electrolyte depletion, and cell resistance, and eventually leads to a steep drop in the rechargeable capacity of the cell. To compensate for the lithium loss, previous attempts at commercializing lithium metal rechargeable batteries with conventional electrolytes employed a large excess of lithium (>300%) as anode, which consequently decrease the energy density and increase the battery cost.

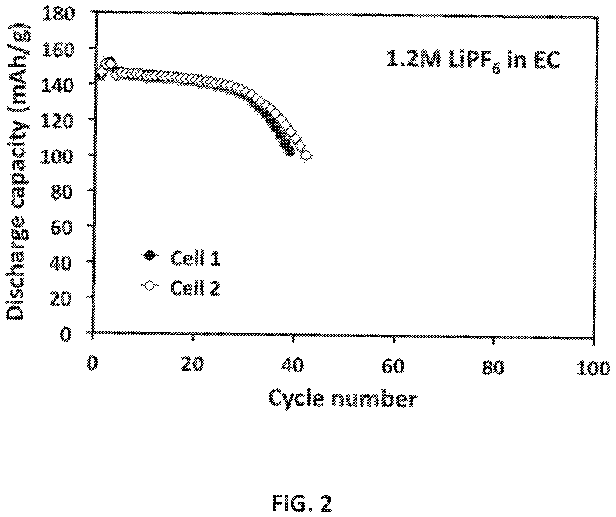

Figure 2 shows the electrochemical cycling performance of coin cells made with 1.2M LiPF₆ in EC electrolyte, having no EMC. The electrolyte was made by physically mixing 1.2 moles of LiPF₆ salt per liter of EC in a magnetic stir plate. Since EC has a melting point of 37°C, it has to be thawed in a hot plate before use. Once mixed with salt, the electrolyte remains liquid at room temperature. As expected, there is a notable improvement in the cycling performance and the cells delivered an average 35 cycles, before the capacity dropped below 80% of the initial capacity.

Conventionally used lithium salts in primary and rechargeable lithium-ion batteries include LiBF₄, LiPF₆, LiAsF₆, and LiClO₄. A simple anion core, stabilized by a Lewis acid, characterizes the anions in these salts. For example, in LiPF₆ salt, the anion is composed of a simple anion core F⁻, stabilized by the Lewis acid PF₅.

Lithium hexafluorophosphate (LiPF₆) is currently the most commonly used lithium salt in rechargeable lithium-ion batteries. Although LiPF₆ has no single outstanding property, it provides a combination of a series of well-balanced properties including conductivity and electrochemical stability. However, LiPF₆ has limited solubility in EC. At its saturation point (about 1.6 moles per liter of EC), it exhibits high viscosity and low ion conductivity, making it impractical for battery application.

Lithium salts with relatively large imide based anions are known to have high solubility in organic solvents. In the past, the research community has explored several lithium imide based salts including LiN(CF₃SO₂)₂ (or LiTFSI) and LiN(C₂F₅SO₂)₂ (or LiBETI) as electrolyte salts for lithium-ion batteries. Although these salts have high solubility (due to a high dissociation constant), the large anion size usually results in higher viscosity and a consequent lower conductivity of the electrolyte. For example, LiTFSI have previously been shown to demonstrate low lithium coulombic efficiency (e.g., in a Lithium-Sulfur battery).

Recently, the lithium imide salt, Lithium bis(fluorosulfonyl)imide (LiN(FSO₂)₂ or LiFSI) has gained attention in the research community as promising electrolyte salt for lithium-ion batteries, as it shows higher ionic conductivity and superior stability than the commercial LiPF₆. In this disclosure, LiFSI salt (with a relatively smaller imide anion), was found to have high solubility, without significant compromise in electrolyte conductivity, which consequently improves the electrochemical cycling performance of the lithium metal battery.

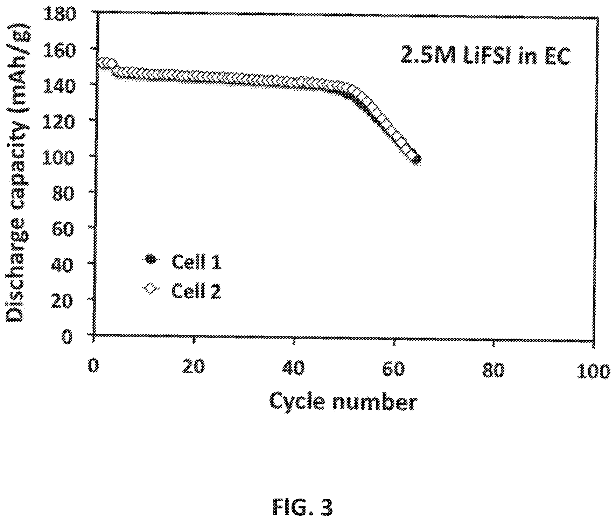

Figure 3 shows the electrochemical cycling performance of coin cells made with 2.5M LiFSI in EC electrolyte. The electrolyte was made by physically mixing 2.5 moles of LiFSI salt per liter of EC in a magnetic stir plate. The cells delivered an average 60 cycles, twice that of 1.2M LiPF₆ in EC, at 80% capacity retention. Although it is possible to dissolve more than 7 moles of LiFSI in a liter of EC, it was surprisingly found that optimum electrochemical performance in the cell can be achieved at a concentration between 2 to 3 moles LiFSI per liter of EC. It was surprisingly found that when the concentration of EC is below about 2 moles LiFSI per liter of EC, the electrolyte reacts with lithium metal, decreasing efficiency and cycle life. It was also surprisingly found that when the concentration of EC is above about 3 moles LiFSI per liter of EC, the viscosity increases which negatively affects the overall system, increases cost, decreases conductivity, and does not improve the efficiency or cycle life. As such, it was surprisingly found that the concentration of EC between about 2 to 3 moles LiFSI per liter of EC provides an optimal balance between efficiency, cycle life, conductivity, cost, and viscosity. In some implementations, the concentration of EC is between about 1.5 to 4 moles LiFSI per liter of EC.

**Table 1: Ionic conductivity of high salt concentration electrolytes.**

| **Solvent** | **Salt** | **Concentration (moles/literₛₒₗᵥₑₙₜ)** | **Conductivity (mS/cm)** |
|---|---|---|---|
| EC:EMC(3:7) | LiPF₆ | 1.2 | 9.2 |
| EC | LiPF₆ | 1.2 | 7.5 |
| EC | LiFSI | 2.0 | 7.7 |
| | | 2.5 | 6.0 |
| | | 3.0 | 4.6 |
| | | 3.5 | 3.9 |
| | | 5.0 | 2.0 |
| | | 7.0 | 1.4 |
| DME | LiFSI | 4 | 8.0 |
| | | 5 | 7.2 |
| | | 6 | 6.4 |
| | | 7.5 | 4.2 |
| | | 10 | 2.3 |

Attaining high salt concentration in the electrolyte, without much sacrifice in ionic conductivity, could have caused the improvement in the cycle performance of cells made with 2.5M LiFSI in EC. Table 1 lists the ionic conductivity values of electrolytes relevant to this disclosure. Ionic conductivity values of the electrolytes were found using a Mettler Toledo conductivity meter with platinum electrodes. The conductivity of the high concentration LiFSI in EC electrolytes are found to be in the same mS/cm range, as the commercial battery electrolyte. The 2.5M LiFSI in EC electrolyte has an ionic conductivity of 6.0 mS/cm, which is not considerably lower compared to 9.2 mS/cm for commercial electrolyte. As the concentration of LiFSI salt in EC increases, the conductivity decreases. When the concentration exceeds 3 moles/liter, the decrease in conductivity and increase in viscosity of the LiFSI in EC electrolyte system, begins to have a negative effect on the electrochemical performance of the cells.

Since EC is an organic solvent with relatively high boiling point and viscosity, it can be difficult to exceed LiFSI salt concentration above 3 moles per liter of EC, without drastically affecting the ionic conductivity of the electrolyte. Therefore, other low boiling solvents have been explored as well, of which, 1,2-dimethoxyethane (DME), was found to show high LiFSI salt solubility. Although DME has lower dielectric constant than EC, its low viscosity helps to further improve the salt solubility of LiFSI salt. Table 2 compares the physical properties of solvents relevant to this disclosure.

**Table 2: Physical properties of solvents used in high salt concentration electrolytes.**

| Solvent | Molecular weight | Melting point (°C) | Boiling point (°C) | Viscosity (cP) | Dielectric constant |
|---|---|---|---|---|---|
| EC | 88 | 37 | 248 | 1.9 (at 40°C) | 89 |
| DME | 90 | -58 | 84 | 0.46 | 7.2 |
| THF | 72 | -108 | 66 | 0.48 | 7.4 |
| DEE | 74 | -116 | 35 | 0.22 | 4.2 |

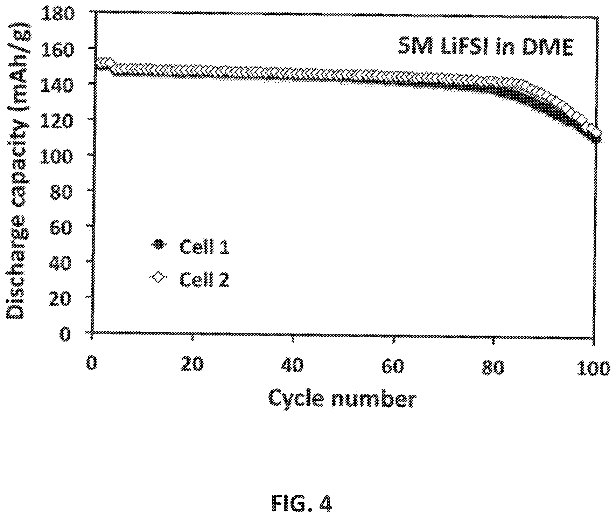

Figure 4 shows the electrochemical cycling performance of coin cells made with 5M LiFSI in DME. The electrolyte was made by physically mixing 5 moles of LiFSI salt per liter of DME in a magnetic stir plate. The cells delivered an average 100 cycles at 80% capacity retention. Table 3 compares the cycle life achieved with the electrolytes relevant to this disclosure. Although it is possible to dissolve more than 10 moles of LiFSI in a liter of DME, the optimum electrochemical performance in the cell was achieved at a concentration between 4 to 6 moles of LiFSI per liter of DME. It was surprisingly found that when the concentration of DME is below about 4 moles LiFSI per liter of DME, the electrolyte reacts with lithium metal, decreasing efficiency and cycle life. It was also surprisingly found that when the concentration of DME is above about 6 moles LiFSI per liter of DME, the viscosity increases which negatively affects the overall system, increases cost, decreases conductivity, and does not improve the efficiency or cycle life. As such, it was surprisingly found that the concentration of DME between about 4 to 6 moles LiFSI per liter of DME provides an optimal balance between efficiency, cycle life, conductivity, cost, and viscosity. In some implementations, the concentration of DME is between about 3 to 7 moles LiFSI per liter of DME. While DME as a solvent has lithium coulombic efficiency inferior to EC, having a high concentration of LiFSI salt helps to improve the electrochemical performance of lithium metal batteries employing the electrolyte.

The ionic conductivity values of electrolytes made with DME as the solvent are listed in Table 1. The 5M LiFSI in DME electrolyte has a slightly higher ionic conductivity of 7.2 mS/cm, than that exhibited by 2.5M LiFSI in EC electrolyte. However, similar to the EC system, as the concentration of LiFSI salt in DME increases, the conductivity decreases.

**Table 3: Average cycle life of cells made with high salt concentration electrolytes**

| **Electrolyte** | **Average cycle life (80% capacity retention)** |
|---|---|
| 1.2 M LiPF₆ in EC:EMC(3:7) | 5 |
| 1.2 M LiPF₆ in EC | 35 |
| 2.5 M LiFSI in EC | 60 |
| 5 M LiFSI in DME | 100 |

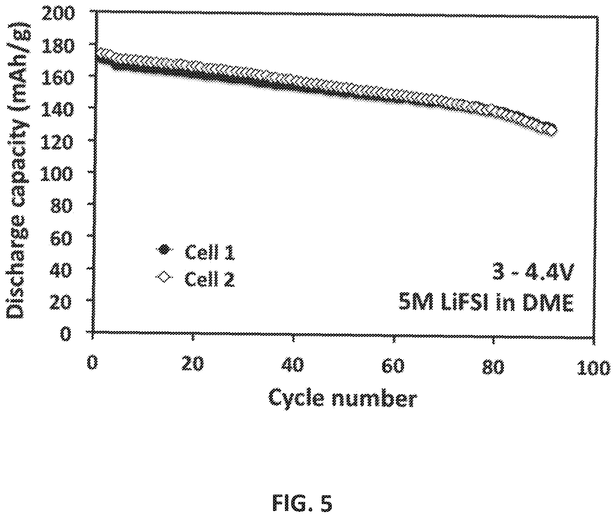

Although LiCoO₂ cathode material has a theoretical capacity of 280 mAh/g, it could only deliver 150 mAh/g between 3 to 4.25V. To improve the capacity further, the charge cut-off voltage of the cell could be increased to 4.4V. Figure 5 shows the electrochemical cycling performance of coin cells made with 5M LiFSI in DME that were cycled between 3 to 4.4V. The cells delivered an initial discharge capacity of 170 mAh/g, and an average 85 cycles at 80% capacity retention, which shows the superior electrochemical stability of the 5M LiFSI in DME electrolyte, even at higher voltages.

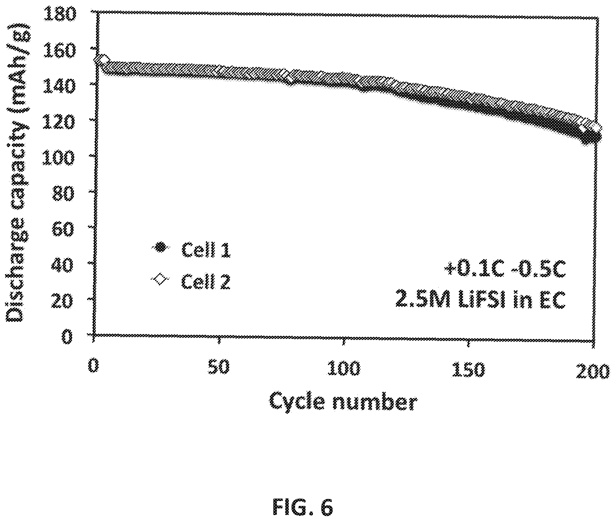

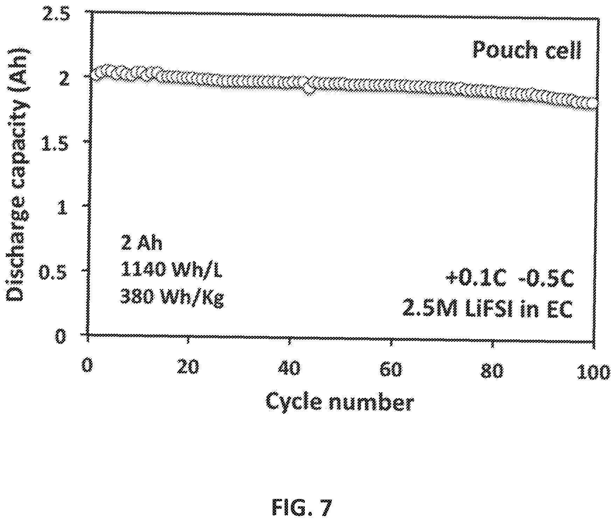

The cycling performance of cells made with the high salt concentration electrolytes could be further improved by reducing the charge rate to 0.1C, while keeping the discharge rate at 0.5C. Figure 6 shows the electrochemical cycling performance of coin cells made with 2.5M LiFSI in EC electrolyte, cycled at 0.1C charge and 0.5C discharge rate. The cells exhibit an average 200 cycles, at 0.1C charge rate, compared to 60 cycles at 0.7C charge rate. The better cycle life at 0.1C charge rate is due to further enhancements in lithium deposition and coulombic efficiency at low current densities. Figure 7 shows the electrochemical cycling performance of a 2 Ah pouch cell made with 2.5M LiFSI in EC electrolyte. The 2 Ah pouch cell was cycled between 3 to 4.4 V, and have an energy density of 1140 Wh/L and a specific energy of 380 Wh/kg.

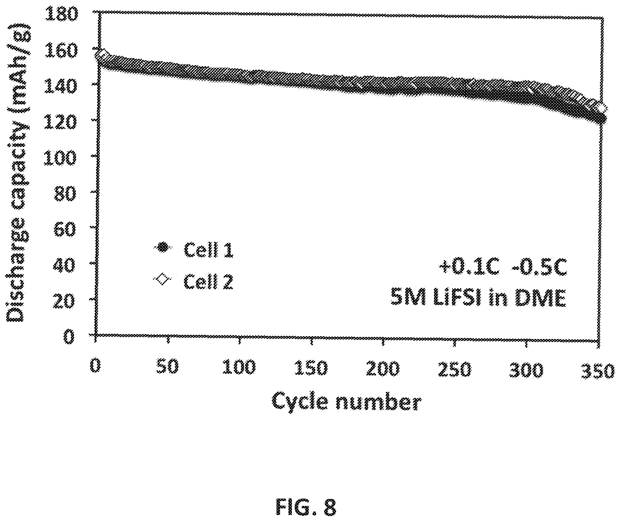

Figure 8 shows the electrochemical cycling performance of coin cells made with 5M LiFSI in DME electrolyte, cycled at 0.1C charge and 0.5C discharge rate. The cells exhibit an average 350 cycles, at 0.1C charge rate, compared to 100 cycles at 0.7C charge rate.

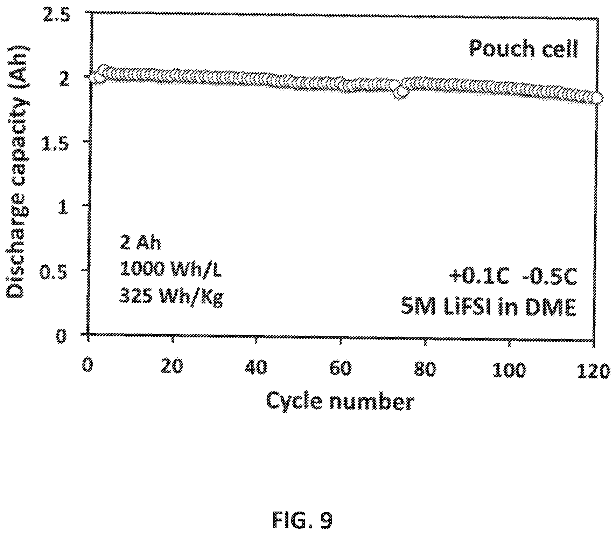

Figure 9 shows the electrochemical cycling performance of a 2 Ah pouch cell made with 5M LiFSI in DME electrolyte. The 2 Ah pouch cell was cycled between 3 to 4.25 V, and have an energy density of 1000 Wh/L and a specific energy of 325 Wh/kg.

The reversibility of lithium electro-plating/stripping on anode in the high salt concentration electrolytes was quantitatively determined by measuring the lithium coulombic efficiency. In this experiment, a coin cell was made with copper foil as the working electrode and a thick lithium foil as the counter electrode. The separator was soaked with the electrolyte for which the lithium coulombic efficiency was measured. During charge, lithium was deposited on the copper foil, and the capacity was limited to 3 mAh/cm² (∼15 um thick lithium deposition) and during discharge the deposited lithium was stripped off the copper foil until the potential reached +0.5 V, and this process was repeated for several cycles at 0.7C rate. For each cycle, lithium coulombic efficiency was determined by measuring the ratio of discharge to charge capacity. The parameters 3 mAh/cm² and 0.7C rate were chosen to mimic the actual conditions in a cell made with LiCoO₂ cathode, as described previously.

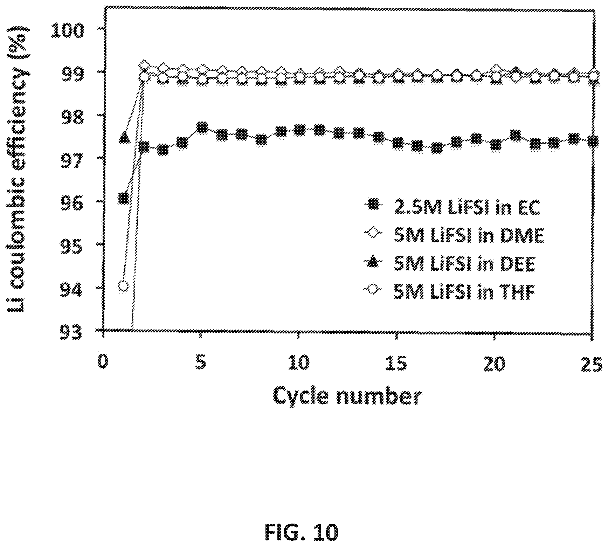

Figure 10 shows the lithium coulombic efficiency of various high salt concentration electrolytes discussed in this work. The lithium coulombic efficiency of the commercially available 1.2M LiPF₆ in EC:EMC (3:7) electrolyte (not shown) is found to be below 75%. An efficiency of below 75% indicates that more than 25% of lithium is consumed in each cycle by detrimental reaction with the electrolyte. By comparison, the average lithium coulombic efficiency of 2.5M LiFSI in EC electrolyte was found to be about 97.5% and that of 5M LiFSI in DME to be about 99%. The higher lithium coulombic efficiency of high salt concentration electrolytes correlate well to the superior cycling performance achieved in the cell test. The lithium coulombic efficiency of the electrolytes could be further improved by reducing the charge/discharge rate.

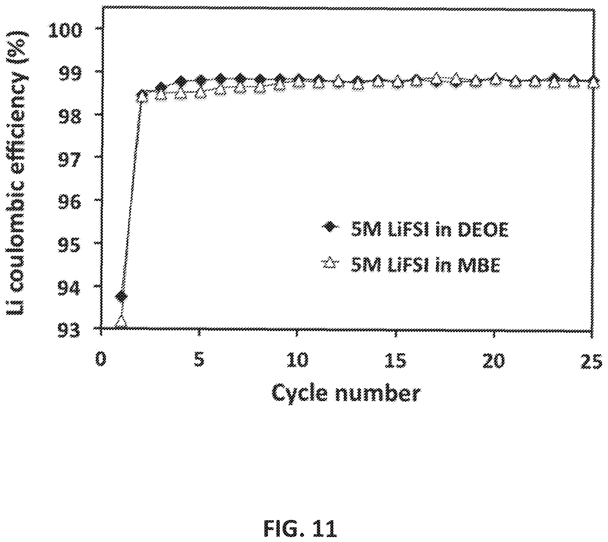

Other low boiling solvents such as DEE (Diethylether) and THF (tetrahydrofuran) were also explored as solvents for the high salt concentration electrolyte. Table 2 compares the physical properties of DEE and THF. Although they have lower dielectric constant, their low viscosity helps to achieve high solubility of LiFSI salt. Figure 10 shows the lithium coulombic efficiency of the 5M LiFSI in DEE and 5M LiFSI in THF electrolytes. Their average lithium coulombic efficiency were found to be about 99%. Although the high salt concentration electrolytes made with DEE and THF as solvent were found to be relatively unstable at the high LiCoO₂ cathode potential, they could be used in cells employing other cathodes that could intercalate lithium at lower potentials. In addition, structural analogues of DME and DEE, such as DEOE (Diethoxyethane) and MBE (methylbutylether), respectively, were also found to show average lithium coulombic efficiency about 99%, as shown in Figure 11.

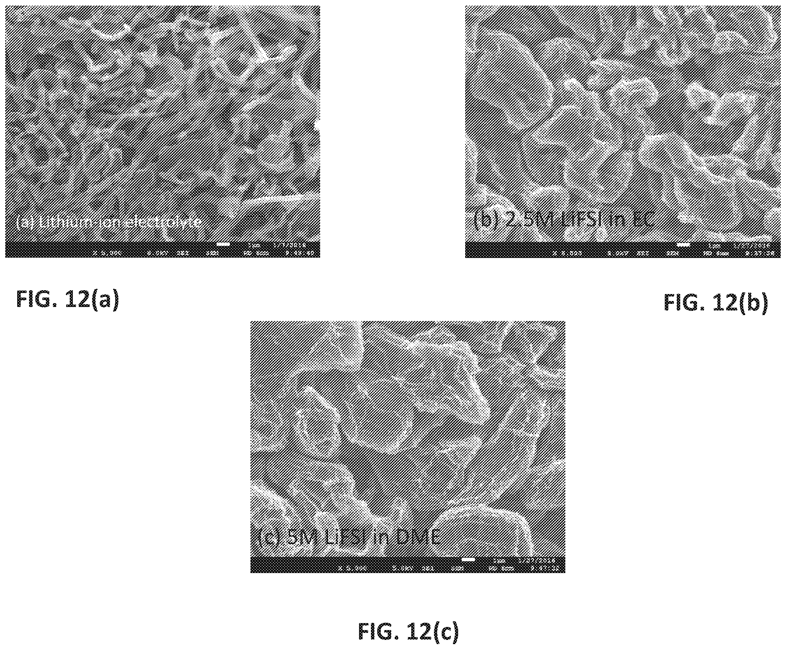

Figure 12 (a) - (c) shows SEM images of electrodeposited lithium in the electrolytes investigated in the study. The commercial lithium-ion electrolyte shows needle-like dendritic morphology, while the 3M LiFSI in EC and 5M LiFSI in DME show a much coarser morphology, with larger grain size. The low surface area and porosity of the electro-deposited lithium in high salt concentration electrolytes will minimize the reaction between the deposited lithium and the liquid electrolyte, which consequently improves the lithium coulombic efficiency and cycle life of the cell.

It is contemplated that systems, devices, methods, and processes of the claimed invention encompass variations and adaptations developed using information from the embodiments described herein. Adaptation and/or modification of the systems, devices, methods, and processes described herein may be performed by those of ordinary skill in the relevant art.

Throughout the description, where articles, devices, and systems are described as having, including, or comprising specific components, or where processes and methods are described as having, including, or comprising specific steps, it is contemplated that, additionally, there are articles, devices, and systems of the present invention that consist essentially of, or consist of, the recited components, and that there are processes and methods according to the present invention that consist essentially of, or consist of, the recited processing steps.

It should be understood that the order of steps or order for performing certain action is immaterial so long as the invention remains operable. Moreover, two or more steps or actions may be conducted simultaneously.

The mention herein of any publication, for example, in the Background section, is not an admission that the publication serves as prior art with respect to any of the claims presented herein. The Background section is presented for purposes of clarity and is not meant as a description of prior art with respect to any claim.

It is to be understood that the disclosed subject matter is not limited in its application to the details of construction and to the arrangements of the components set forth in the following description or illustrated in the drawings. The disclosed subject matter is capable of other embodiments and of being practiced and carried out in various ways. Also, it is to be understood that the phraseology and terminology employed herein are for the purpose of description and should not be regarded as limiting.

## Claims

1. A rechargeable battery, comprising:
a cathode;
a lithium metal anode; and
a liquid electrolyte comprising a lithium imide salt with a fluorosulfonyl (FSO₂) group,
wherein the electrolyte is an organic solvent with lithium imide salt concentration of at least 2 moles per liter of the organic solvent; and
wherein the cathode active material is a layered or a spinel oxide material selected from the group consisting of LiCoO₂, Li(Ni_{1/3}Mn_{1/3}Co_{1/3})O₂, Li(Ni_{0.8}Co_{0.15}Al_{0.05})O₂, LiMn₂O₄, Li(Mn_{1.5}Ni_{0.5})₂O₄, or their lithium rich versions.

2. The battery of claim 1, wherein the lithium imide salt consists essentially of LiN(FSO₂)₂.

3. The battery of claim 1, wherein the lithium imide salt is or comprises LiN(FSO₂)₂, LiN(FSO₂)(CF₃SO₂), LiN(FSO₂)(C₂F₅SO₂), and any combination thereof.

4. The battery of any preceding claim, wherein the electrolyte has lithium salt concentration between 2 to 10 moles per liter of the organic solvent.

5. The battery of any preceding claim, wherein the electrolyte contains a cyclic carbonate selected from ethylene carbonate or propylene carbonate, their derivatives, and any combinations or mixtures thereof, as the organic solvent, or
wherein the electrolyte contains a cyclic ether selected from tetrahydrofuran or tetrahydropyran, their derivatives, and any combinations and mixtures thereof as the organic solvent, or
wherein the electrolyte contains a glyme selected from dimethoxyethane, diethoxyethane, triglyme, or tetraglyme, their derivatives, and any combinations and mixtures thereof as the organic solvent, or
wherein the electrolyte contains an ether selected from diethylether or methylbutylether, their derivatives, and any combinations and mixtures thereof as the organic solvent.

6. The battery of any preceding claim, wherein the organic solvent consists essentially of dimethoxyethane, optionally wherein,
the electrolyte has lithium salt concentration between 4 to 6 moles per liter of the organic solvent, or
the electrolyte has lithium salt concentration between 3 to 7 moles per liter of the organic solvent.

7. The battery of any one of claims 1-5, wherein the organic solvent consists essentially of ethylene carbonate, optionally wherein,
the electrolyte has lithium salt concentration between 2 to 3 moles per liter of the organic solvent, or
the electrolyte has lithium salt concentration between 2 to 4 moles per liter of the organic solvent.

8. The battery of any preceding claim, wherein the anode is a lithium metal foil pressed on a current collector including copper foil or mesh, optionally wherein,
the anode has lithium foil thickness ranging from 0.1 to 100 microns, or, the anode has lithium foil thickness ranging from 5 to 50 microns, or the anode has lithium foil thickness ranging from 10 to 30 microns.

9. The battery of any one of claims 1-7, wherein the anode is a bare current collector including copper foil or mesh, and lithium is subsequently plated on the bare current collector during the first charge of the battery.

10. The battery of any preceding claim, wherein the battery has a form factor selected from the group consisting of coin, pouch, prism, cylindrical, or thin film.

## Patentansprüche

1. Wiederaufladbare Batterie, die Folgendes beinhaltet:
eine Kathode;
eine Lithiummetallanode; und
einen Flüssigelektrolyt, der Lithiumimidsalz mit einer Fluorsulfonylgruppe (FSO₂-Gruppe) beinhaltet, wobei der Elektrolyt ein organisches Lösungsmittel mit einer Lithiumimidsalzkonzentration von mindestens 2 Mol pro Liter des organischen Lösungsmittels ist; und
wobei das aktive Kathodenmaterial ein geschichtetes oder ein Spinell-Oxid-Material ist, ausgewählt aus der Gruppe, bestehend aus LiCoO₂, Li(Ni_{1/3}Mn_{1/3}Co_{1/3})O₂, Li(Ni_{0,8}Co_{0,15}Al_{0,05})O₂, LiMn₂O₄, Li(Mn_{1,5}Ni_{0,5})₂O₄ oder deren lithiumreichen Varianten.

2. Batterie gemäß Anspruch 1, wobei das Lithiumimidsalz grundsätzlich aus LiN(FSO₂)₂ besteht.

3. Batterie gemäß Anspruch 1, wobei das Lithiumimidsalz LiN(FSO₂)₂, LiN(FSO₂)(CF₃SO₂), LiN(FSO₂)(C₂F₅SO₂) und eine Kombination von diesen ist oder beinhaltet.

4. Batterie gemäß einem vorhergehenden Anspruch, wobei der Elektrolyt eine Lithiumsalzkonzentration von 2 bis 10 Mol pro Liter des organischen Lösungsmittels aufweist.

5. Batterie gemäß einem vorhergehenden Anspruch, wobei der Elektrolyt ein zyklisches Carbonat, ausgewählt aus Ethylencarbonat oder Propylencarbonat, deren Derivaten und Kombinationen oder Mischungen von diesen, als das organische Lösungsmittel enthält, oder wobei der Elektrolyt ein zyklisches Ether, ausgewählt aus Tetrahydrofuran oder Tetrahydropyran, deren Derivaten und Kombinationen oder Mischungen von diesen, als das organische Lösungsmittel enthält, oder wobei der Elektrolyt ein Glym, ausgewählt aus Dimethoxyethan, Diethoxyethan, Triglym oder Tetraglym, deren Derivaten und Kombinationen oder Mischungen von diesen, als das organische Lösungsmittel enthält, oder wobei der Elektrolyt ein Ether, ausgewählt aus Diethylether oder Methylbutylether, deren Derivaten und Kombinationen und Mischungen von diesen, als das organische Lösungsmittel enthält.

6. Batterie gemäß einem vorhergehenden Anspruch, wobei das organische Lösungsmittel grundsätzlich aus Dimethoxyethan besteht, wobei optional der Elektrolyt eine Lithiumsalzkonzentration von 4 bis 6 Mol pro Liter des organischen Lösungsmittels aufweist oder der Elektrolyt eine Lithiumsalzkonzentration von 3 bis 7 Mol pro Liter des organischen Lösungsmittels aufweist.

7. Batterie gemäß einem der Ansprüche 1-5, wobei das organische Lösungsmittel grundsätzlich aus Ethylencarbonat besteht, wobei optional der Elektrolyt eine Lithiumsalzkonzentration von 2 bis 3 Mol pro Liter des organischen Lösungsmittels aufweist oder der Elektrolyt eine Lithiumsalzkonzentration von 2 bis 4 Mol pro Liter des organischen Lösungsmittels aufweist.

8. Batterie gemäß einem vorhergehenden Anspruch, wobei die Anode Lithiummetallfolie ist, die auf einen Stromkollektor gepresst ist, der Kupferfolie oder -geflecht umfasst, wobei optional die Anode eine Lithiumfoliendicke im Bereich von 0,1 bis 100 Mikrometer aufweist oder die Anode eine Lithiumfoliendicke im Bereich von 5 bis 50 Mikrometer aufweist oder die Anode eine Lithiumfoliendicke im Bereich von 10 bis 30 Mikrometer aufweist.

9. Batterie gemäß einem der Ansprüche 1-7, wobei die Anode ein blanker Stromkollektor ist, der Kupferfolie oder -geflecht umfasst, und Lithium anschließend während der ersten Ladung der Batterie auf den blanken Stromkollektor aufgebracht wird .

10. Batterie gemäß einem vorhergehenden Anspruch, wobei die Batterie einen Formfaktor ausweist, ausgewählt aus der Gruppe, bestehend aus Münze, Pouch, Prisma, zylindrisch oder Dünnfilm.

## Revendications

1. Batterie rechargeable, comprenant :
une cathode ;
une anode à base de lithium métallique ;
et un électrolyte liquide comprenant un sel de lithium imide avec un groupe fluorosulfonyle (FSO₂), dans laquelle l'électrolyte et un solvant organique dont la concentration en sel de lithium imide est d'au moins 2 moles par litre du solvant organique ;
et dans laquelle le matériau actif de cathode est un matériau en couche ou un matériau d'oxyde de spinelle choisi dans le groupe constitué de LiCoO₂, Li(Ni_{1/3}Mn_{1/3}Co_{1/3})O₂, Li(Ni_{0,8}Co_{0,15}Al_{0,05})O₂, LiMn₂O₄, Li(Mn_{1,5}Ni_{0,5})₂O₄, ou leurs versions riches en lithium.

2. Batterie selon la revendication 1, dans laquelle le sel de lithium imide consiste essentiellement en du LiN(FSO₂)₂.

3. Batterie selon la revendication 1, dans laquelle le sel de lithium imide est le ou comprend du LiN(FSO₂)₂, du LiN(FSO₂)(CF₃SO₂), du LiN(FSO₂)(C₂F₅SO₂), et toute combinaison de ceux-ci.

4. Batterie selon l'une quelconque des revendications précédentes, dans laquelle l'électrolyte a une concentration en sel de lithium comprise entre 2 et 10 moles par litre de solvant organique.

5. Batterie selon l'une quelconque des revendications précédentes, dans laquelle l'électrolyte contient un carbonate cyclique choisi parmi le carbonate d'éthylène le carbonate de propylène, leurs dérivés, et toute combinaison ou mélange de ceux-ci, en tant que solvant organique, ou dans laquelle l'électrolyte contient un éther cyclique choisi parmi le tétrahydrofurane ou le tétrahydropyrane, leurs dérivés, et toute combinaison et mélange de ceux-ci en tant que solvant organique, ou dans laquelle l'électrolyte contient un glyme choisi parmi le diméthoxyéthane, le diéthoxyéthane, le triglyme, ou le tétraglyme, leurs dérivés, et toute combinaison et mélange de ceux-ci en tant que solvant organique, ou dans laquelle l'électrolyte contient un éther choisi parmi le diéthyléther ou le méthylbutyléther, leurs dérivés, et toute combinaison et mélange de ceux-ci en tant que solvant organique.

6. Batterie selon l'une quelconque des revendications précédentes, dans laquelle le solvant organique consiste essentiellement en du diméthoxyéthane, dans laquelle, l'électrolyte a éventuellement une concentration en sel de lithium comprise entre 4 et 6 moles par litre du solvant organique, ou l'électrolyte a éventuellement une concentration en sel de lithium comprise entre 3 et 7 moles par litre du solvant organique.

7. Batterie selon l'une quelconque des revendications 1 à 5, dans laquelle le solvant organique consiste essentiellement en du carbonate d'éthylène, dans laquelle, l'électrolyte a éventuellement une concentration en sel de lithium comprise entre 2 et 3 moles par litre du solvant organique, ou l'électrolyte a éventuellement une concentration en sel de lithium comprise entre 2 et 4 moles par litre du solvant organique.

8. Batterie selon l'une quelconque des revendications précédentes, dans laquelle l'anode est une feuille métallique de lithium pressé sur un collecteur de courant y compris un feuillage ou un maillage de cuivre, dans laquelle, l'anode a éventuellement une épaisseur de feuille de lithium allant de 0,1 à 100 microns, ou, l'anode a éventuellement une épaisseur de feuille de lithium allant de 5 à 50 microns, l'anode a éventuellement une épaisseur de feuille de lithium allant de 10 à 30 microns.

9. Batterie selon l'une quelconque des revendications 1 à 7, dans laquelle l'anode est un collecteur de courant nu y compris un feuillage ou un maillage de cuivre, et du lithium est ensuite plaqué sur le collecteur de courant nu pendant la première charge de la batterie.

10. Batterie selon l'une quelconque des revendications précédentes, dans laquelle la batterie présente un facteur de forme choisi dans le groupe constitué d'un film en forme de pièce, de poche, de prisme, cylindrique ou d'une couche mince.
